(19) Europäisches Patentamt
European Patent Office
Office européen des brevets

(11) **EP 4 197 340 A1**

(12) **EUROPEAN PATENT APPLICATION**
published in accordance with Art. 153(4) EPC

(43) Date of publication:
**21.06.2023 Bulletin 2023/25**

(21) Application number: **20947570.6**

(22) Date of filing: **28.07.2020**

(51) International Patent Classification (IPC):
**A22C 25/00** (2006.01)    **A22C 25/08** (2006.01)
**A23B 4/00** (2006.01)    **A23B 4/06** (2006.01)
**B65G 33/00** (2006.01)    **B65G 33/24** (2006.01)
**F25D 13/06** (2006.01)    **B21H 3/00** (2006.01)

(52) Cooperative Patent Classification (CPC):
**A22C 25/00; A22C 25/08; A23B 4/00; A23B 4/06;
B21H 3/00; B65G 33/00; B65G 33/24; F25D 13/06**

(86) International application number:
**PCT/IB2020/057107**

(87) International publication number:
**WO 2022/023791 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Mackenna Salinas, Carlos Adolfo
Puerto Varas, 5550000 (CL)**

(72) Inventor: **Mackenna Salinas, Carlos Adolfo
Puerto Varas, 5550000 (CL)**

(74) Representative: **Clarke Modet & Co.
C/ Suero de Quiñones 34-36
28002 Madrid (ES)**

(54) **A SYSTEM FOR THE PROCESSING OF BIOMASS OR FOOD PRODUCT OR FISH FOR PROCESSING, ACHIEVING AN OPTIMISATION OF THE THERMAL POTENTIAL ENERGY WITH REGARD TO THE VOLUME OF A COOLANT FLUID**

(57) A system (100) for the processing of biomass or food product or fish (500) to be processed, which achieves an optimization of the thermal potential energy with respect to the volume of a cooling fluid and a dwell time of said biomass, even under discontinuities of the loading and unloading process, comprising: a means of transport (400) for transferring the biomass (500) to be processed to a spiral tank (200), wherein the means of transport (400) for transferring the (500) to be processed comprises a deviation means (405), to distribute said biomass (500) along the spiral tank (200); a rotating spiral screw (300) that is located inside the spiral tank (200), to form a plurality of chambers with the inner wall of the spiral tank (200), as the rotating spiral screw (300) rotates the biomass (500) to be processed located in the receiving chambers of said biomass, through the cooling fluid, moves from an inlet section to the spiral tank (200) to an outlet section of the spiral tank (200), wherein at least two volumes of the plurality of chambers are different from each other through a variable pitch of the spiral screw (300), and thereby achieving optimization of the thermal potential energy with respect to the volume of cooling fluid.

Fig. 3a

**Description**

FIELD OF THE INVENTION

The present technology is related to the aquaculture industry and food production in general. In particular, the present technology relates to a system for the processing of food portions, that achieves an optimization of the thermal potential energy, even under discontinuities of the process of loading the food portions to a cooling tank, due to the thermal exchange between the incoming object and the medium, with a lower volume of cooling.

In particular, it relates to a device and method that achieves an optimization of the thermal potential energy of the fluid, wherein the device and method are designed to buffer unproductive activities and ensuring a more efficient average process productivity.

Currently in the food processing industry, spiral tanks (spiral tank or bleeding tank or chilling tank) or tank with worm or Archimedes screw, are used to cool biomass or food product or fish, specifically, in the spiral ponds the fish are inserted to be bled after having been slaughtered to be bled or after being eviscerated. The bleeding process of the fish must be done between 18°C and -1°C, but the fish to be bled are at a temperature that corresponds, normally to their environment, which in the case of the sea is between 2°C to 18°C which generates an increase in thermal load of the fluid that is inside the spiral tank(s). In addition, the post-evisceration cooling process is performed between 18°C and -4°C, which depends on the evisceration temperature.

In addition, there is another important restriction which is that of the minimum dwell time of the biomass or food product or fish to be processed, which is necessary for the temperature lowering process, this together with the fact that the screw allows the flow in the same direction which prevents the load of the biomass or food product or fish to be processed from being loaded at the end close to the outlet of the spiral tank, given these production variables, it is that a variable pitch helical screw is required to compensate for the speed restrictions consisting of the screw with respect to the load and temperature variability of the biomass or food product or fish to be processed, in a limited cooling time which is sought to be minimal. This dwell time normally ranges from 20 minutes to 250 minutes.

The form of operation is allowing thermal exchange between the object and the medium. Normally the used medium is liquid ice (in English: Fluid Ice or slurry ice), a mixture with ice + water (can be fresh or salt water) also is used or the use of RSW (Refrigerated Sea Water) systems, which cool salt water without changing state, always keeping it in a liquid state.

In the case of cooling fish, it is a widely used system since it eliminates the risk of freezing, since fish are frozen under -2° due to their biochemical composition (presence of lipids) and the RSW cooling system works at -2 ° C (usually joins some degrees Celsius more). In this manner, there is no risk of freezing compared to other methods (flake ice, fluid ice, etc.) used in the prior art.

This is also an advantage, since, if for some productive reason it is necessary to stop the process, thermally it is not a problem, that is, increasing the dwell time or affects the quality of the raw material and even has a positive factor, but it reduces production and can even generate an increase in costs.

The spiral tank fulfills the function of cooling the biomass, normally they are FIFOs, (first in first out, for example) in the lateral loading or frontal loading process, the biomass or food product or fish to be processed are at a temperature higher than that of the fluid which generates variations of thermal load according to the dwell time of the biomass in the spiral tank, as the temperature of said biomass decreases, and since these must be a minimum time inside the tank, it is of relevance that the volumes of the chamber that receive the biomass are greater respect of the volumes that have lower external thermal load product of the biomass entered.

PRIOR ART

In the prior art there is diverse literature regarding the cooling of biomass, normally the process requires a dwell time. Body temperature depends on several factors, however, it behaves exponentially and depends on several factors:

1.- Properties of the Body (Thermal properties, Geometry, density variability and heat transfer within the same body (fish), etc.)

2.- Thermal Gradient (difference of the body to be cooled versus the medium where it is cooled)

3.- Density of work: It is important to maintain an adequate working density for proper heat transfer. The working density will depend on the thermal potential energy, since the process becomes inefficient over certain levels of thermal energy/ volume.

4.- Recirculation: It allows a stability of the temperature of the medium in addition to providing the body with thermal energy available to be absorbed.

5.- Stirring: It has been shown that aeration stirring allows the separation of the bodies in addition to generating a turbulent flow, improving the thermal transfer.

This is reflected in the following equation, when the constant fluid temperature:

$$Q = hA_s(T - T_\infty) = -\rho V(cp)(\frac{dT}{dt})$$

Wherein:

h= heat-transfer convection coefficient [W/(m$^2$*K)]
V= the volume of the body (m$^3$)
$A_s$= the surface area of the body (m$^2$)
T = body temperature in K
$T_\infty$ = Fluid Temperature in K
$\rho$ = the density of the body in (Kg/m$^3$)
$c_p$ = Heat capacity of the body [J/(kg*K)]
t = time in seconds

The variation of a body's temperature over time is:

$$T-T_\infty = (T_i-T_\infty)\ e^{-\beta}$$

$$\beta = \frac{hA}{\rho VCp} \text{ wherein } \beta = \frac{1}{\tau}$$

$\tau$= Time constant
The total heat transferred ($Q_{total}$) over time is:

$$Q_{total} = \rho Vc_p\,(T_i - T),$$

wherein
$T_i$= initial body temperature in (K)
The spiral tank fulfils the function of providing a dwell time in order to provide a heat exchange to the biomass. The operation is normally by FIFO system and the advancement is by means of progressive thrust of the helicoid generated by the rotation of said helicoid.
Normally in the processes of food slaughter processes, there is entry variability (average and deviation), which generates that the density (biomass/volume) is variable between the different compartments, generating inefficiencies in thermal transfer (e.g.: some sections may be with a lot of density and others empty), that is, the system is vulnerable to inefficiencies before and after the process (stops or speed variations). A common problem in these equipments is that, if they are loaded by a fixed end, and the helicoid advances at a constant speed, if the process is stopped necessarily the advance has to be stopped, even having space available in some compartments. The productivity of this type of equipment is given by the multiplication of the previous and subsequent processes, for example, if the productivity of the previous process is 80% and that of the subsequent process is 85%, it would deliver a total yield of 68% (assuming that the inefficiencies do not overlap).
A solution to the above is lateral loading, i.e., if the product is counted (or weighed) it is feasible to load the Spiral Tank maintaining the same density for each compartment (units/volume or mass/volume). This allows a better thermal exchange since it prevents density increases and empty spaces between medium and it is also feasible to generate a buffer or dampener, which dampens the speed differences (process variability) and supporting in this buffer, the inefficiencies due to stop in the next or previous process and vice versa, for example, if the next process is stopped, the previous process can continue to work, filling the available chamber.
The cooling density (temperature potential energy)/volume of the medium is a very relevant factor for sizing the spiral tank, since, at high thermal densities, the transfer becomes inefficient. Aeration or air blowing systems are normally used to agitate the medium, generating separation and improving turbulent flow transfer. It is also recommended to generate a recirculation to homogenize the temperature of the medium (since this temperature is higher in the area with higher product density, also affecting the shorter dwell time in the biomass tank.

As the product advances in the screw the volumetric density is the same however its temperature decreases, i.e., the thermal potential energy is decreasing, therefore the spiral tank becomes progressively more inefficient in the sections that have products at less temperature.

One way to improve this inefficiency is to incorporate 2 or more spiral tanks in series, in this way the first one can work at a lower density since the thermal potential energy is higher and then passes to another spiral tank designed with a higher density considering that the thermal potential energy is lower. While this solution decreases the volume required, each spiral tank is inefficient in itself, in addition to increasing the cost of investment.

The cooling of biomass or food behaves exponentially depending on several factors, the most important being the temperature differential between the body and the medium (Newton's law of cooling).

There are several studies regarding the optimal thermal density of work, for example, some investigations in salmon salmo-salar species, within them concludes that the optimal thermal load should not exceed 3.0 kWh/ m$^3$, since on this limit the cooling efficiency "chilling index" is affected.

The current problem is that the spiral tanks available on the market are loaded with a fixed density, i.e., with a thermal potential energy/ volume, however, as the process progresses and the body decreases its temperature, i.e., the thermal potential energy/ volume decreases, so a progressive inefficiency is generated due to the use of the same volume per section, i.e., the thermal potential energy/ volume decreases.

The technology consists of a spiral tank with variable pitch, that is, as the biomass advances and its temperature decreases, the density (biomass/average volume) is increased, in this way it is sought to maintain a thermal potential energy/volume adequate to optimize the process, throughout the spiral tank, maintaining a constant thermal load in each chamber.

Currently in the industry is the patent application PCT/EP2018/052563 which discloses an arrangement for fish processing, comprising: a fish slaughtering device, a fish counting device, a first and a second transport device designed to transfer the slaughtered fish to a spiral tank device, wherein a screw conveyor forms a plurality of fish receiving chambers, for the fish to pass from one chamber to another to its outlet and control devices, but has the drawback of having uniform chambers that do not achieve the required thermal-volume optimization, that is, once loaded with fish, the volumetric density (kg/m3) is maintained at each lock throughout the advance, being that as the fish are lowering their temperature they require a lower potential thermal density, that is, the patent application PCT/EP2018/052563 does not achieve an optimization of the thermal potential energy with respect to the volume of a cooling fluid and does not achieve a lower dwell time of said biomass for the volume used.

Within the known, there is also patent US3368363, which discloses a process for freezing food using liquid refrigerant, comprising a fixed or variable pitch spiral screw designed to rapidly freeze food. The purpose of the apparatus is to freeze food avoiding agglomeration and allowing the frosting in the outer layer, that is why in the first sections the products have a greater volume available, and once they are already frozen the volume of the sections is decreased. Although in some way there is an optimization of the necessary space, the technology does not address the problem of optimization of the thermal potential energy, rather it is focused on avoiding agglomerations in the freezing, that is, the patent US3368363, does not achieve an optimization of the thermal potential energy with respect to the volume of a cooling fluid and does not achieve a shorter dwell time of said biomass. Nor does it manage to withstand the discontinuities of the charging process, in other words, US3368363 does not solve the variability (discontinuity, dispersion or stops) in the inlet or outlet of the biomass i.e., the charging density of the chambers is variable according to the variability of the previous or subsequent process.

In light of the above, none of the prior art documents achieves an optimization of the thermal potential energy with respect to the volume of a cooling fluid and with shorter dwell time of said biomass, under the production restrictions that are:

a) existence of a minimum dwell time of the biomass or food product or fish to be processed within the cooling and/or bleeding fluid regulated by the rotation speed of the helical screw, which fluctuates between 15 minutes and 120 minutes, which is necessary to minimize for an efficient process of lowering the temperature of said biomass,
b) discontinuities in the process of loading said biomass,
c) that the screw allows a same flow direction, which prevents the loading of the biomass or food product or fish to be processed from being carried out at the end close to the outlet of the spiral tank,
d) that the minimum temperature of the fluid cannot be lower than the freezing point (-2°C), and
e) the thermal inertia that the biomass or food product or fish to be processed brings before entering the spiral tank that generates a temperature difference of between 20°C and 2°C,

is therefore the need to have a helical screw, worm or variable pitch Archimedes screw, which compensates for the variability of the entry or exit of the biomass or food product or fish to be processed, through a conveyor belt that optimizes the load on the system according to the capacity of each airlock, without the need to have a greater volume of fluid in each airlock or a greater dwell time, wherein each airlock is formed between the inner side of the tank and the blades of the helical screw, in the entry zone of the biomass or food product or fish to be processed and lower volume of fluid in the exit zone of the biomass or food product or fish to be processed.

With the present system an adequate time inside the spiral tank is achieved, achieving the desired temperature, which is between - 2°C to 10°C, achieving an optimization of the thermal potential energy with respect to the volume of fluid, reflected in a shorter dwell time of the biomass and with a smaller volume of cooling fluid.

SOLUTION TO TECHNICAL PROBLEM.

To overcome the problem raised, a helical screw, worm or variable pitch Archimedes screw, is presented, which compensates for the variability of the inlet or outlet of the biomass or food product or fish to be processed, through a greater volume of fluid, formed between the inner side of the tank and the blades of the helical screw, in the inlet zone of the biomass or food product or fish to be processed and lower volume of fluid in the outlet zone of said biomass, achieving an optimization of the thermal potential energy with respect to the volume of fluid, reflected in a shorter dwell time of the biomass and with a lower volume of cooling fluid.

DESCRIPTION OF THE DRAWINGS

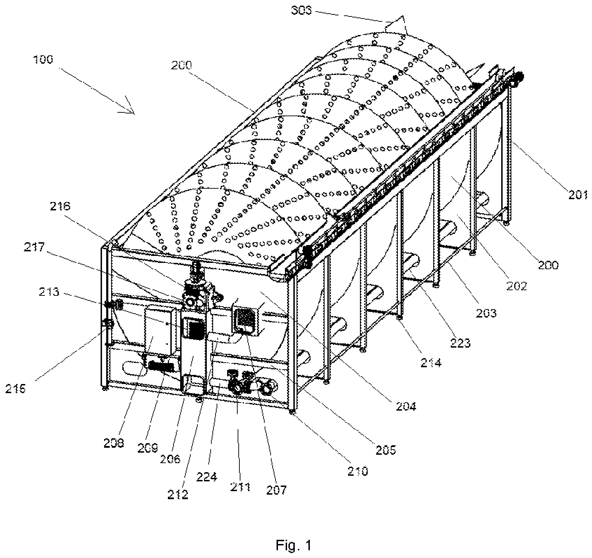

Figure 1 shows a front isometric view of a referring configuration of the technology.

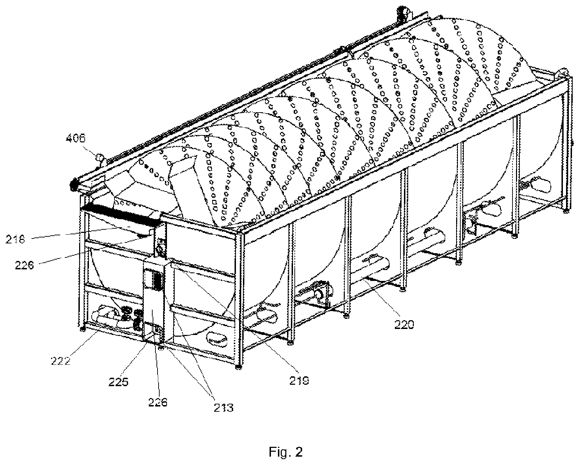

Figure 2 shows a rear isometric view of a referring configuration of the technology.

Figure 3a shows a top view of a referring configuration of the technology, in which the first three volumes are equal then decrease and the last three volumes are equal and smaller than the first ones.

Figure 3b shows a top view of a referring configuration of the technology, in which the first three volumes are equal and small, then the four central volumes increase in size, which in turn decrease towards the outlet and subsequently the last volumes are equal and smaller than the first ones.

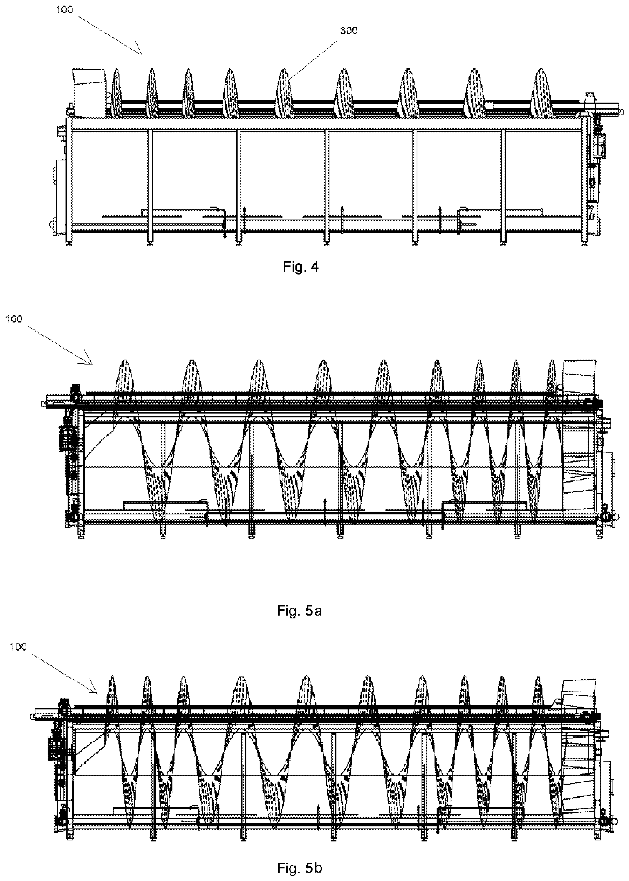

Figure 4 shows a side view of a referring configuration of the technology.

Figure 5a shows a sectional side view of a referring configuration of the technology.

Figure 5b shows a sectional side view of another referring configuration of the technology.

DESCRIPTION OF THE INVENTION

As seen in the figures the present technology is a system (100) for the processing of biomass or food product or fish (500) to be processed, that achieves an optimization of the thermal potential energy with respect to the volume of a cooling fluid and a dwell time of said biomass, even under discontinuities of the loading and unloading process, comprising:

a means of transport (400) for transferring the biomass (500) to be processed to a spiral tank (200), wherein the means of transport (400) for transferring the biomass (500) to be processed comprises a deviation means (405), for distributing said biomass (500) along the spiral tank (200);
a rotating spiral screw (300) that is located inside the spiral tank (200), to form a plurality of chambers with the inner wall of the spiral tank (200), as the rotating spiral screw (300) rotates the biomass (500) to be processed located in the receiving chambers of said biomass, through the cooling fluid, moves from an inlet section to the spiral tank (200) to an outlet section of the spiral tank (200), wherein at least two volumes of the plurality of chambers are different from each other through a variable passage of the spiral screw (300), and thereby achieving optimization of the thermal potential energy with respect to the volume of cooling fluid.

In a preferred configuration, the variable pitch of the spiral screw (300) comprises at least two equal pitches to form at least two equal volumes of the plurality of chambers and at least two distinct pitches to form at least two distinct volumes of the plurality of chambers.

In another preferred configuration, the variable pitch of the spiral screw (300) comprises variable pitches between each helicoid to form different volumes of the plurality of chambers.

In another preferred configuration, the variable pitch of the spiral screw (300) comprises decreasing variable pitches between each helicoid to form different volumes of the plurality of chambers.

In another preferred configuration, the variable pitch of the spiral screw (300) comprises decreasing variable pitches between each helicoid to form different volumes of the plurality of chambers, up to a portion of the length of spiral screw (300) and then the variable pitch of the spiral screw (300) comprises increasing variable pitches between each helicoid to form different volumes of the plurality of chambers.

In another preferred configuration, the variable pitch of the spiral screw (300) comprises increasing variable pitches between each helicoid to form different volumes of the plurality of chambers, up to a portion of the length of spiral screw (300) and then the variable pitch of the spiral screw (300) comprises decreasing variable pitches between each helicoid to form different volumes of the plurality of chambers.

The spiral tank (200) is a horizontal cylinder portion, or the spiral tank (200) is a horizontal cone portion.

The last helicoid is separated from the spiral screw (300) and is operatively coupled to rotate at a speed different from the spiral screw (300) through a speed variation means or through a secondary force transmission means, not shown in the figures.

The helicoids (301) of the spiral screw (300) are solid with perforations (304) or formed with meshes, or mixture thereof, to improve the thermal stability of the fluid. Only the perforated helicoids are shown in the figures as one of the preferred configurations.

In another preferred configuration, recirculation piping (223) that connect one chamber to another, to improve the recirculation of the fluid and thereby further improve the thermal stability of the fluid with the biomass (500). Wherein the thermal stability of the fluid can also be improved by joining the use of the helicoids (301) of the spiral screw (300) with perforations (304) or meshed with the fluid recirculation systems.

To prevent the biomass from joining at the bottom, second fluid transmission piping are installed for the blowing of the fluid, wherein the second fluid transmission piping are perforated, and the second fluid is air or water at a lower temperature than that of the fluid.

In another preferred configuration, the transport means for transferring portions of food to a spiral tank (200) comprises temperature sensors, mass sensors and counting means the portions of food or fish, furthermore controllers distribute the load to the spiral tank (200) of the portions of food to improve the thermal stability of the fluid, which varies the load to the spiral tank (200) according to the processing of the data delivered by said sensors.

Controllers control the speed of the rotating spiral screw (300) to improve the thermal stability of the fluid, which further comprises fluid temperature, water pressure, fluid level, biomass inlet control and counting controllers to the spiral tank (200).

In another preferred configuration, temperature, water pressure, fluid level, biomass inlet control and counting controllers are further included in the spiral tank (200).

In another preferred configuration, an automatic control system managed through a human-machine interface or through a cloud data controller or a server, which acquires the data from the sensors and adjusts the variables through the controllers.

EXAMPLE OF APPLICATION

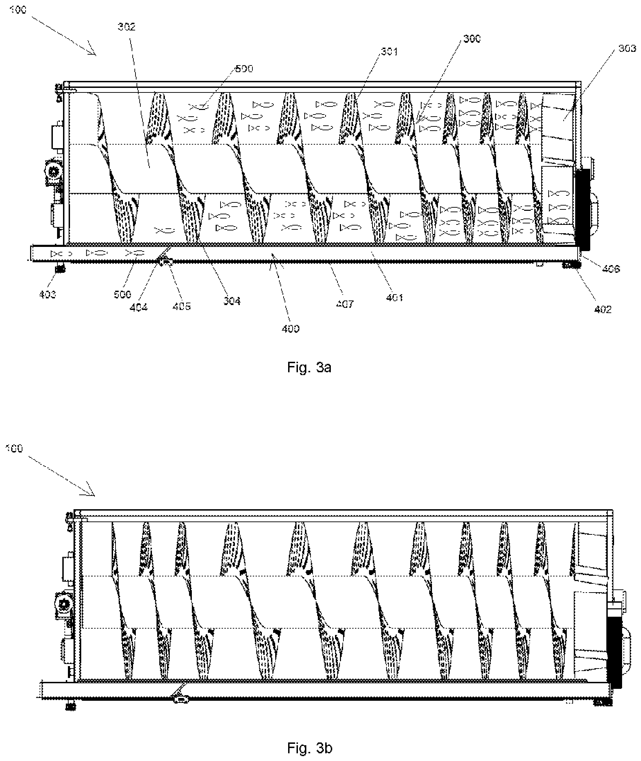

In a preferred configuration, as shown in figure 3b, in which the first three volumes are equal and small, then the four central volumes increase in size, which in turn decrease towards the outlet and subsequently the last volumes are equal and smaller than the first ones, according to an equation that optimizes the thermal potential energy/ volume, until reaching a target density, as shown in the following table.

| | T (°C) biomass | T (°C) RSW | Dwell time (min) | Density (Kg/m3) | Biomass (kg) | Design volume (m3) | Screw diameter (m) | Section area (m2) | Helicoid pitch (m) |
|---|---|---|---|---|---|---|---|---|---|
| Volume 1 (Buffer) | 12.0 | -0.5 | 10 | 400 | 2,000 | 5.0 | 3.5 | 4.81 | 1.0394 |
| Volume 2 (Buffer) | 12.0 | -0.5 | 10 | 400 | 2,000 | 5.0 | 3.5 | 4.81 | 1.0394 |

(continued)

|  | T (°C) biomass | T (°C) RSW | Dwell time (min) | Density (Kg/m3) | Biomass (kg) | Design volume (m3) | Screw diameter (m) | Section area (m2) | Helicoid pitch (m) |
|---|---|---|---|---|---|---|---|---|---|
| Volume 3 (Buffer) | 12.0 | -0.5 | 10 | 400 | 2,000 | 5.0 | 3.5 | 4.81 | 1.0394 |
| Volume 4 | 12.0 | -0.5 | 10 | 215 | 2,000 | 9.3 | 3.5 | 4.81 | 1.9328 |
| Volume 5 | 9.6 | -0.5 | 10 | 265 | 2,000 | 7.5 | 3.5 | 4.81 | 1.5667 |
| Volume 6 | 7.7 | -0.5 | 10 | 327 | 2,000 | 6.1 | 3.5 | 4.81 | 1.2700 |
| Volume 7 | 6.2 | -0.5 | 10 | 404 | 2,000 | 5.0 | 3.5 | 4.81 | 1.0294 |
| Volume 8 | 4.9 | -0.5 | 10 | 498 | 2,000 | 4.0 | 3.5 | 4.81 | 0.8344 |
| Volume 9 | 3.9 | -0.5 | 10 | 500 | 2,000 | 4.0 | 3.5 | 4.81 | 0.8315 |
| Volume 10 | 3.0 | -0.5 | 10 | 500 | 2,000 | 4.0 | 3.5 | 4.81 | 0.8315 |
| Volume 11 | 2.4 | -0.5 | 10 | 500 | 2,000 | 4.0 | 3.5 | 4.81 | 0.8315 |
| Volume 12 (unloading) | 1.8 | -0.5 | 10 | 500 | 2,000 | 4.0 | 3.5 | 4.81 | 0.8315 |

With the following design parameters:

| | | |
|---|---|---|
| kcal | 1 | |
| J | 4.184 | |
| 1 J/sec | 1 watt | |
| k | 0021 | |
| Process Biomass | ton/h | 12 |
| | kgs/min | 200 |
| T° Starting Biomass | °C | 12 |
| Cp | kcal/kg°C | 0.8 |
| | J/kg°C | 3347 |
| **Potential Energy Design** | **kwh** | **2.5** |
| Maximum Density | kgs/m$^3$ | 500 |
| Buffer Density | kgs/m$^3$ | 400 |
| Target T° | °C | 1.8 |
| Productive Buffer | min | 30 |
| Buffer Density | | |
| Rotation Time | 0.1 | rpm |

Biomass enters the belt (4)

The biomass entered the spiral tank in a controlled manner, through the recording of the weight of the fish on a flow balance.

The control system governed the entry and synchronized it with the exit of the biomass in order to ensure that the biomass has a minimum dwell time.

The control system also managed water ingress, as a renewal rate was maintained, optimizing water flow.

The elements used to control the process were:

level control (sensor)

water inlet control (flow sensor)

temperature control (inlet and outlet)

water pressure control (inlet and outlet)

They also included pulses of air to different compartments so that the biomass is kept moving, preventing it from decanting at the bottom.

The opening of the valves was timed by the control system.

At the end of the process it was connected to a CIP (Clean in place) type cleaning system which was connected through the water and air network.

In order to facilitate the reader's understanding of the figures, a list of parts of the system is presented.

| | |
|---|---|
| 100 | System |
| 200 | Spiral tank |
| 201 | Structural Support |
| 202 | Structural web |
| 203 | Transverse support |
| 204 | Front cover |
| 205 | Front transverse support |
| 206 | Water box |
| 207 | Upper water box |
| 208 | Dashboard |
| 209 | Control elements |
| 210 | Cold water inlet |
| 211 | Cold water outlet |
| 212 | Connection elements |
| 213 | Record caps |
| 214 | Adjustable supports |
| 215 | Water inlet control system |
| 216 | Spiral screw rotation means |
| 217 | Spiral screw shaft |
| 218 | Dewaterer |
| 219 | Helical Assembly 300 Shaft Support System 217 |
| 220 | Fluid distribution piping (Air, water) |
| 221 | Structural element |
| 222 | Connection Piping |
| 223 | Recirculation piping |
| 224 | Control valves |
| 225 | Drain |
| 226 | drain |
| 300 | Spiral Screw |
| 301 | Helicoid |
| 302 | Center tube |
| 303 | Unloading paddles |
| 304 | Perforations |
| 400 | Side loading |
| 401 | Means of transport |
| 402 | Conveyor belt drive means |
| 403 | Drive means with travel control |
| 404 | Driving linear positioner with toothed belt |
| 405 | Deviation means |
| 406 | Belt End |
| 407 | Positioner support rail |
| 500 | Biomass or food product or fish |

**Claims**

1. A system (100) for processing biomass or food product or fish (500) to be processed, that achieves an optimization of the thermal potential energy with respect to the volume of a cooling fluid and a dwell time of said biomass, even under discontinuities of the loading and unloading process, **characterized in that** it comprises:

a means of transport (400) for transferring the biomass (500) to be processed to a spiral tank (200), wherein the means of transport (400) for transferring the biomass (500) to be processed comprises a deviation means (405), for distributing said biomass (500) along the spiral tank (200);
a rotating spiral screw (300) that is located inside the spiral tank (200), to form a plurality of chambers with the inner wall of the spiral tank (200), as the rotating spiral screw (300) rotates the biomass (500) to be processed located in the receiving chambers of said biomass, through the cooling fluid, moves from an inlet section to the spiral tank (200) to an outlet section of the spiral tank (200), wherein at least two volumes of the plurality of chambers are different from each other through a variable passage of the spiral screw (300), and thereby achieving optimization of the thermal potential energy with respect to the volume of cooling fluid.

2. The system (100) for processing of claim 1, **characterized in that** the variable pitch of the spiral screw (300) comprises at least two equal pitches to form at least two equal volumes of the plurality of chambers and at least two distinct pitches for forming at least two distinct volumes of the plurality of chambers.

3. The system (100) for processing of claim 1, **characterized in that** the variable pitch of the spiral screw (300) comprises variable pitches between each helicoid to form different volumes of the plurality of chambers.

4. The system (100) for processing of claim 1, **characterized in that** the variable pitch of the spiral screw (300) comprises decreasing variable pitches between each helicoid to form different volumes of the plurality of chambers.

5. The system (100) for processing of claim 1, **characterized in that** the variable pitch of the spiral screw (300) comprises decreasing variable pitches between each helicoid to form different volumes of the plurality of chambers, up to a portion of the length of spiral screw (300) and then the variable pitch of the spiral screw (300) comprises increasing variable pitches between each helicoid to form different volumes of the plurality of chambers.

6. The system (100) for processing of claim 1, **characterized in that** the variable pitch of the spiral screw (300) comprises increasing variable pitches between each helicoid to form different volumes of the plurality of chambers, up to a portion of the length of spiral screw (300) and then the variable pitch of the spiral screw (300) comprises decreasing variable pitches between each helicoid to form different volumes of the plurality of chambers.

7. The system (100) for processing according to one of the preceding claims, **characterized in that** the spiral tank (200) is a horizontal cylinder portion.

8. The system (100) for processing according to one of the preceding claims, **characterized in that** spiral tank (200) is a horizontal cone portion.

9. The system (100) for processing of claim 1, **characterized in that** the last helicoid is separated from the spiral screw (300), and is operatively coupled to rotate at a speed different from the spiral screw (300) through a speed variation means.

10. The system (100) for processing of claim 1, **characterized in that** the last helicoid is separated from the spiral screw (300), and rotates at a speed other than the spiral screw (300) through a secondary force transmission means.

11. The system (100) for processing of claim 1, **CHARACTERIZED IN THAT** the helicoids (301) of the spiral screw (300) are solid with perforations (304) or formed with meshes or mixture thereof to improve thermal stability of the fluid.

12. The system (100) for the processing of claim 1, **characterized in that** it further comprises recirculation piping (223) that connect one chamber to another, to improve the recirculation of the fluid and thereby further improve the thermal stability of the fluid with the biomass (500).

13. The system (100) for processing of claim 1, **characterized in that** it further comprises second fluid transmission piping for fluid blowing.

14. The system (100) for processing of claim 13, **characterized in that** the second fluid transmission piping are perforated.

15. The system (100) for processing of claim 13, **characterized in that** the second fluid is air or water at a lower temperature than that of the fluid.

16. The system (100) for processing of claim 1, **characterized in that** the means of transport for transferring food portions to a spiral tank (200) comprises temperature sensors, mass sensors and counting means of food portions.

17. The system (100) for processing of claim 1 or 16, **characterized in that** controllers distribute the load to the spiral tank (200) of the food portions to improve the thermal stability of the fluid.

18. The system (100) for processing of claim 1, **characterized in that** controllers control the speed of the rotating spiral screw (300) to improve the thermal stability of the fluid.

19. The system (100) for processing of claim 1, **characterized in that** it further comprises fluid temperature, water pressure, fluid level, biomass inlet control and counting controllers to the spiral tank (200).

20. The system (100) for processing of claim 1 or 16, **characterized in that** it further comprises temperature, water pressure, fluid level, inlet control and counting controllers to the spiral tank (200).

21. The system (100) for processing according to one of the claims 16 to 20, **characterized in that** furthermore an automatic control system managed through a human-machine interface or through a cloud data controller or a server, which acquires the data from the sensors and adjusts the variables through the controllers.

**Amended claims under Art. 19.1 PCT**

1. A system (100) for processing biomass or food product or fish (500) to be processed, that achieves an optimization of the thermal potential energy with respect to the volume of a cooling fluid without risk of freezing biomass or food product or fish (500) and a dwell time of said biomass, even under discontinuities of the loading and unloading process, **CHARACTERIZED in that** it comprises:

   a means of transport (400) for transferring the biomass (500) to be processed to a spiral tank (200), wherein the means of transport (400) for transferring the biomass (500) to be processed comprises a deviation means (405), for distributing said biomass (500) along the spiral tank (200);
   a rotating spiral screw (300) that is located inside the spiral tank (200), to form a plurality of chambers with the inner wall of the spiral tank (200), as the rotating spiral screw (300) rotates the biomass (500) to be processed located in the receiving chambers of said biomass, through the cooling fluid, moves from an inlet section to the spiral tank (200) to an outlet section of the spiral tank (200), wherein at least two volumes of the plurality of chambers are different from each other through a variable passage of the spiral screw (300), and thereby achieving optimization of the thermal potential energy with respect to the volume of cooling fluid.

2. The system (100) for processing of claim 1, **CHARACTERIZED in that** the variable pitch of the spiral screw (300) comprises at least two equal pitches to form at least two equal volumes of the plurality of chambers and at least two distinct pitches for forming at least two distinct volumes of the plurality of chambers.

3. The system (100) for processing of claim 1, **CHARACTERIZED in that** the variable pitch of the spiral screw (300) comprises variable pitches between each helicoid to form different volumes of the plurality of chambers.

4. The system (100) for processing of claim 1, **CHARACTERIZED in that** the variable pitch of the spiral screw (300) comprises decreasing variable pitches between each helicoid to form different volumes of the plurality of chambers.

5. The system (100) for processing of claim 1, **CHARACTERIZED in that** the variable pitch of the spiral screw (300) comprises decreasing variable pitches between each helicoid to form different volumes of the plurality of chambers, up to a portion of the length of spiral screw (300) and then the variable pitch of the spiral screw (300) comprises increasing variable pitches between each helicoid to form different volumes of the plurality of chambers.

6. The system (100) for processing of claim 1, **CHARACTERIZED in that** the variable pitch of the spiral screw (300) comprises increasing variable pitches between each helicoid to form different volumes of the plurality of chambers, up to a portion of the length of spiral screw (300) and then the variable pitch of the spiral screw (300) comprises decreasing variable pitches between each helicoid to form different volumes of the plurality of chambers.

7.   The system (100) for processing according to one of the preceding claims, **CHARACTERIZED in that** the spiral tank (200) is a horizontal cylinder portion.

8.   The system (100) for processing according to one of the preceding claims, **CHARACTERIZED in that** spiral tank (200) is a horizontal cone portion.

9.   The system (100) for processing of claim 1, **CHARACTERIZED in that** the last helicoid is separated from the spiral screw (300), and is operatively coupled to rotate at a speed different from the spiral screw (300) through a speed variation means.

10.  The system (100) for processing of claim 1, **CHARACTERIZED in that** the last helicoid is separated from the spiral screw (300), and rotates at a speed other than the spiral screw (300) through a secondary force transmission means.

11.  The system (100) for processing of claim 1, **CHARACTERIZED IN THAT** the helicoids (301) of the spiral screw (300) are solid with perforations (304) or formed with meshes or mixture thereof to improve thermal stability of the fluid.

12.  The system (100) for the processing of claim 1, **CHARACTERIZED in that** it further comprises recirculation piping (223) that connect one chamber to another, to improve the recirculation of the fluid and thereby further improve the thermal stability of the fluid with the biomass (500).

13.  The system (100) for processing of claim 1, **CHARACTERIZED in that** it further comprises second fluid transmission piping for fluid blowing.

14.  The system (100) for processing of claim 13, **CHARACTERIZED in that** the second fluid transmission piping are perforated.

15.  The system (100) for processing of claim 13, **CHARACTERIZED in that** the second fluid is air or water at a lower temperature than that of the fluid.

16.  The system (100) for processing of claim 1, **CHARACTERIZED in that** the means of transport for transferring food portions to a spiral tank (200) comprises temperature sensors, mass sensors and counting means of food portions.

17.  The system (100) for processing of claim 1 or 16, **CHARACTERIZED in that** controllers distribute the load to the spiral tank (200) of the food portions to improve the thermal stability of the fluid.

18.  The system (100) for processing of claim 1, **CHARACTERIZED in that** controllers control the speed of the rotating spiral screw (300) to improve the thermal stability of the fluid.

19.  The system (100) for processing of claim 1, **CHARACTERIZED in that** it further comprises fluid temperature, water pressure, fluid level, biomass inlet control and counting controllers to the spiral tank (200).

20.  The system (100) for processing of claim 1 or 16, **CHARACTERIZED in that** it further comprises temperature, water pressure, fluid level, inlet control and counting controllers to the spiral tank (200).

21.  The system (100) for processing according to one of the claims 16 to 20, **CHARACTERIZED in that** furthermore an automatic control system managed through a human-machine interface or through a cloud data controller or a server, which acquires the data from the sensors and adjusts the variables through the controllers.

Fig. 1

Fig. 2

Fig. 3a

Fig. 3b

Fig. 4

Fig. 5a

Fig. 5b

**EP 4 197 340 A1**

| INTERNATIONAL SEARCH REPORT | International application No. |
|---|---|
| | PCT/IB2020/057107 |

**A. CLASSIFICATION OF SUBJECT MATTER**

A22C25/00, 25/08; A23B4/00, 4/06; B65G33/00, 33/24; F25D13/06, B21H3/00 (2021.01)

According to International Patent Classification (IPC) or to both national classification and IPC

**B. FIELDS SEARCHED**

Minimum documentation searched (classification system followed by classification symbols)

(CIP) A22C25/00, 25/08; A23B4/00, 4/06; B65G33/00, 33/24; F25D13/06, B21H3/00 (CPC) A22B5/0076; F25D13/065

Documentation searched other than minimum documentation to the extent that such documents are included in the fields searched

Electronic data base consulted during the international search (name of data base and, where practicable, search terms used)

DERWENT INNOVATION, EPOQUE, ESP@ACENET, GOOGLE PATENTS, INAPI

**C. DOCUMENTS CONSIDERED TO BE RELEVANT**

| Category* | Citation of document, with indication, where appropriate, of the relevant passages | Relevant to claim No. |
|---|---|---|
| X Y | US2020146302 (A1) (MORRIS & ASS, INC) 14-05-2020 The whole Description and Figures 1-32 | 1-15 16-21 |
| Y | AU2018233468 (A1) (NORDISCHER MASCHINENBAU RUD. BAADER GMBH + CO. KG) 01-08-2019 The whole Description and Figure 1 (family member(s), cited in the application) | 16-21 |
| A | US4499740 (A) (AIR PRODUCTS AND CHEMICALS, INC) 19-02-1985 The whole Description and Figures 1-3 | |
| A | CN110775659 A) (UNIV XI AN JIAOTONG) 11-02-2020 Description and Figure 1 | |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06/04/2021 | 19/04/2021 |

| Name and mailing address of the ISA/ INAPI Av. Libertador Bernardo O'Higgins 194, Piso 17, Santiago, Chile | Authorized officer REYES SILVA, Juan |
|---|---|
| Facsimile No. | Telephone No. 56-2-28870551 |

Form PCT/ISA/210 (second sheet) (January 2015)

16

**INTERNATIONAL SEARCH REPORT**
Information on patent family members

International application No.

PCT/IB2020/057107

| Patent document cited in the search report | Publication Date | Patent family member(s) | | Publication Date |
|---|---|---|---|---|
| US2020146302 (A1) | 14-05-2020 | BR112018001476 | A2 | 11-09-2018 |
| | | CN107920539 | A | 17-04-2018 |
| | | MX2018001730 | A | 17-05-2018 |
| | | US2017042165 | A1 | 16-05-2017 |
| | | US9717256 | B2 | 01-08-2017 |
| | | US2017325468 | A1 | 16-11-2017 |
| | | US10226052 | B2 | 12-03-2019 |
| | | US2019090495 | A1 | 28-03-2019 |
| | | US10537112 | B2 | 21-01-2020 |
| | | WO2017027511 | A1 | 16-02-2017 |
| AU2018233468 (A1) | 15-03-2019 | AU2018233468 | B2 | 09-04-2020 |
| | | CL2019002562 | A1 | 10-01-2020 |
| | | CN110418928 | A | 05-11-2019 |
| | | CN110418928 | B | 08-01-2021 |
| | | DK201900980 | A1 | 21-08-2019 |
| | | EP3376141 | A1 | 19-09-2018 |
| | | EP3376141 | B1 | 26-02-2020 |
| | | RU2711745 | C1 | 21-01-2020 |
| | | WO2018166704 | A1 | 20-09-2018 |
| US4499740 (A) | 19-02-1985 | BR8306124 | A | 12-06-1984 |
| | | CA1228240 | A | 20-10-1987 |
| | | EP0109210 | A2 | 23-05-1984 |
| | | EP0109210 | A3 | 05-09-1984 |
| | | EP0109210 | B1 | 09-07-1986 |
| | | ES8500717 | A1 | 01-11-1984 |
| | | GB2131142 | A | 13-06-1984 |
| | | GB2131142 | B | 05-03-1986 |
| | | JPS59107174 | A | 21-06-1984 |
| | | KR840006403 | A | 29-11-1984 |
| | | KR880001432 | B1 | 08-08-1988 |
| | | MX156790 | A | 04-10-1988 |
| | | ZA838063 | B | 26-06-1985 |
| CN110775659 (A) | 11-02-2020 | NONE | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2018052563 W
- US 3368363 A